# NEUE EUROPÄISCHE PATENTSCHRIFT

(11) **EP 0 883 521 B2**
(45) Veröffentlichungstag und Bekanntmachung des Hinweises auf die Entscheidung über den Einspruch: **23.04.2003**
(45) Hinweis auf die Patenterteilung: 13.10.1999
(21) Anmeldenummer: 97903338.8
(22) Anmeldetag: 19.02.1997
(51) Int. Cl.: B60R 16/02

(54) **MULTIFUNKTIONSEINRICHTUNG FÜR EIN KRAFTFAHRZEUG**
MULTIPURPOSE ARRANGEMENT FOR A MOTOR VEHICLE
DISPOSITIF MULTIFONCTION POUR AUTOMOBILE

(30) Priorität: 02.03.1996 DE 19608103; 02.03.1996 DE 19608101; 18.06.1996 DE 19624225
(43) Veröffentlichungstag der Anmeldung: 16.12.1998
(73) Patentinhaber: Volkswagen Aktiengesellschaft, 38436 Wolfsburg (DE)
(72) Erfinder: DOBBERKAU, Thomas, D-38527 Meine (DE); KRIEGEL, Dieter, D-38528 Adenbüttel (DE); BESEL, Klaus-Gert, D-38126 Braunschweig (DE); GOLISCH, Frank, D-38108 Braunschweig (DE); LENGFELD, Olaf, D-38547 Calberlah (DE)
(86) Internationale Anmeldenummer: EP9700809
(87) Internationale Veröffentlichungsnummer: WO97031803

(56) Entgegenhaltungen:
- EP-A- 0 233 844
- EP-A- 0 338 405
- DE-A- 3 628 333
- DE-C- 4 328 564
- US-A- 4 225 005
- US-A- 5 457 575
- RADIO FERNSEHEN ELEKTRONIK, Bd. 42, Nr. 11, November 1993, BERLIN ,DE, Seiten 20-23, XP000466219 BOCHMANN: "EIN AUDIO - UND VIDEOSYSTEM"

## Beschreibung

Die Erfindung betrifft eine Multifunktionseinrichtung nach dem Oberbegriff des Anspruchs 1, wie sie aus der EP-A-338 405 bekannt ist.

Höhere Verkehrsdichte und der Wunsch der Fahrzeugbenutzer an einen höheren Komfort haben zu einer Vielzahl von elektronischen Zusatzgeräten im Kraftfahrzeug, wie Zielführungseinrichtungen, Warn-, Audio- und Mobilfunkeinrichtungen geführt, die wiederum eine Vielzahl von Informationen und Nachrichten bedingen, die dem Fahrzeugführer übermittelt werden müssen. Für die Informationsübermittlung kommen immer mehr elektronische Anzeigeeinrichtungen, insbesondere in Form von Monitoren oder Bildschirmen, zum Einsatz, die den Vorteil aufweisen, daß an der gleichen Stelle verschiedene Informationen in zeitlicher Reihenfolge angeboten werden können. Die Aufnahme dieser großen Anzahl von Informationen ist für den Fahrzeugführer in seine Fahraufgabe eingebettet, die ein Abwenden des Blickes von der Fahrbahn während des Ablesevorgangs erzwingt. Aus diesem Grund muß die Dauer des Abwendens so kurz wie möglich gehalten werden.

Durch unterschiedliche Lichtverhältnisse, einstrahlendes Licht auf die Anzeigeeinrichtung und auftretende Lichtreflexionen und Spiegelungen auf der Oberfläche der Anzeigeeinrichtung kann der Ablesevorgang sehr erschwert werden. Daraus resultiert eine Ablenkung des Fahrzeugbenutzers, die hinsichtlich ihrer Dauer häufig sicherheitstechnisch nicht zu vertreten ist.

Zur Entspiegelung von Bildschirmen oder Monitoren ist beispielsweise aus der deutschen Patentschrift DE 41 30 930 C2 und den deutschen Offenlegungsschriften DE 41 00 831 A1 und DE 41 17 257 A1 bekannt, entweder direkt auf der Oberfläche der Anzeigeeinrichtung oder einer vorgesetzten Glasscheibe Entspiegelungsbeschichtungen aufzubringen.

Für die Anwendung einer Anzeigeeinrichtung im Kraftfahrzeug schlägt die deutsche Offenlegungsschrift DE 30 19 311 A1 weiterhin vor, die Anzeigefläche der Anzeigeeinrichtung zur Verhinderung von Spiegelungen und Reflexion in einer Lage ungleich 90° zur Blickrichtung des Betrachters auf die Anzeigefläche anzuordnen und die Zeichen und Symbole derart verzerrt auf der Anzeigefläche darzustellen, daß sie aus der Blickrichtung des Betrachters entzerrt wahrnehmbar sind.

Aus der deutschen Patentschrift DE 43 28 564 C1 ist eine Multifunktionseinrichtung bekannt, bei der in der Prallplatte des Lenkrads ein Bildschirm vorgesehen ist, auf dem Symbole elektrisch erzeugt werden, wobei diese unabhängig von einer Drehung des Lenkrades stationär ausgerichtet bleiben. Die optisch erfaßbaren Funktionselemente sind in einem plattenartigen Bedienteil aus durchsichtigem Material angeordnet, das zwischen einer zurückgeklappten Ruheposition und einer in ein Sichfeld zwischen Prallkörper und Lenkradkranz vorgeklappten Betriebsposition an dem Prallkörper schwenkbar gelagert ist und Mittel zum Arretieren in der Ruheposition und in der Betriebsposition aufweist.

Mittel zur Verbesserung des Ablesevorganges bei unterschiedlichen Lichtverhältnissen im Kraftfahrzeug sind nicht offenbart.

Des weiteren wird in der deutschen Offenlegungsschrift DE 44 25 204 A1 um die Spiegelungen in der Anzeigeoberfläche einer Anzeigeeinrichtungen eines Kraftfahrzeugs zu vermindern, vorgeschlagen, die Deckgläser der Anzeigeeinrichtung so auszurichten, daß sich aus einer mittleren Blickrichtung des Fahrers ein vor der Anzeigeeinrichtung liegender Teil der Armaturentafel in den Deckgläsern spiegelt.

Bei in der Größe unterschiedlichen Fahrzeugbenutzern und unterschiedlichen Sitzeinstellungen führen die bekannten Lösungen nicht immer zum gewünschten Erfolg.

Vor diesem Hintergrund liegt der Erfindung die Aufgabe zugrunde, eine gattungsgemäße Multifunktionseinrichtung so weiterzubilden, daß unter Berücksichtigung der individuellen Ergonomie eines Fahrzeugbenutzers und der jeweils im Fahrbetrieb gegebenen Lichtverhältnisse die Anzeigeeinrichtung so ablesbar wird, daß durch in das Fahrzeug einstrahlendes Licht und/oder durch helle Innenraumflächen verursachte Spiegelungen und Reflektionen weitgehend vermieden oder sogar vollständig beseitigt werden können.

Diese Aufgabe wird gelöst mit einer Multifunktionseinrichtung gemäß den Merkmalen des Patentanspruchs 1. Die Unteransprüche betreffen besonders vorteilhafte Weiterbildungen der Erfindung.

Erfindungsgemäß ist zumindest die elektronische Anzeigeeinrichtung der Multifunktionseinrichtung zur Verbesserung der Ablesbarkeit in mindestens zwei Achsen, vorzugsweise einer senkrechten und einer waagerechten Achse, schwenkbar in dem Ausschnitt des Ausstattungsteils gelagert.

Dies hat den Vorteil, daß neben einer optimalen Ausrichtung der Anzeigeeinrichtung in Abhängigkeit des direkt einfallenden Lichtes auch gegenüber reflektierenden hellen Flecken oder Flächen im Kraftfahrzeug eine Einstellung der Anzeigeeinrichtung bezüglich einer für den Fahrzeugbenutzer angenehmen Ablese- bzw. Blickrichtung möglich ist.

Nach einer Weiterbildung der Erfindung bildet die elektronische Anzeigeeinrichtung gemeinsam mit dem oder den Bedienelementen eine Baueinheit, wobei dann vorteilhafterweise die gesamte Baueinheit in den beiden Achsen schwenkbar gelagert ist.

Vorzugsweise sollte der Winkel, um den die elektronische Anzeigeeinrichtung bzw. die Baueinheit im Ausschnitt des Ausstattungsteils schwenkbar gelagert ist, in beiden Achsen aus konstruktiven Gründen maximal 10 bis 20 ° betragen.

Die schwenkbare Aufhängung der elektronischen Anzeigeeinrichtung bzw. der Baueinheit kann auf unterschiedlichste Art und Weise erfolgen. So ist nach einer Ausführung die Anzeigeeinrichtung bzw. die Baueinheit um eine Lagerung verschwenkbar, die beispielsweise nach Art eines Kugelgelenkes ausgeführt ist. Es ist dabei vorteilhafterweise ein Pfannenelement vorgesehen, in dem ein als Teil- oder Vollkugel ausgebildetes Gelenkkopfelement derart drehbeweglich gehalten ist, daß bei Verschwenkung der Anzeigeeinrichtung bzw. der Baueinheit um das Gelenk einzelne Punkte der Bildschirmoberfläche im Prinzip einen Kugelflächenabschnitt überstreichen können, dessen Krümmungszentrum in etwa im Symmetriepunkt einer rechteck-, oval- oder kreisförmig ausgebildeten Bildschirmoberfläche liegt. Gemäß der Erfindung liegt der Drehpunkt auf der Bildschirmoberfläche. Die Zuordnung des Pfannenelementes bzw. des Gelenkkopfelementes. kann wahlweise entweder der beweglichen Anzeigeeinrichtung bzw. Baueinheit oder zumindest mittelbar dem Ausstattungsteil zugeordnet sein.

Nach einer anderen Ausführungsform ist die Anzeigeeinrichtung bzw. die Baueinheit der Multifunktionseinrichtung um eine Lage überwiegend bündig zur Gehäusefront in einer Lagerung verschwenkbar, die beispielsweise nach Art teleskopierbarer Kugelgelenke ausgeführt ist. Es sind beispielsweise mindestens drei Pfannenelemente vorgesehen, in denen als Teil-oder Vollkugel ausgebildete Gelenkkopfelemente derart drehbeweglich gehalten und insgesamt senkrecht zur Anzeigeeinrichtungsnormallage längsverschieblich angebracht sind, daß durch Drücken auf die Anzeigeeinrichtung bzw. auf die Baueinheit eine Verstellung der Lage in Blickrichtung eines Benutzers ermöglicht wird. Durch die Lagerung in mehreren Lagerstellen ist eine individuelle Einstellbarkeit auf die Bedürfnisse des Benutzers und jeweiligen Sicht- und Lichtgegebenheiten möglich.

Verständlicherweise können die Kugelgelenklagerungen auch in umgekehrter Weise ausgeführt sein, das heißt, die Endbereiche der Kolbenstangen sind als Pfannenelemente ausgebildet und die entsprechenden Kugelelemente sind an der Rückseite der Anzeigeeinrichtung bzw. der Baueinheit angebracht. Durch die Umkehrung der Formen der Kugelgelenklagerung wird die Beweglichkeit der Anzeigeeinrichtung bzw. der Baueinheit nicht eingeschränkt.

Eine vorteilhafte Ausgestaltung der Ausführungsform besteht in der Koppelung der Lagerstellen. Die Koppelung der Lagerstellen kann durch unterschiedliche Wirkverbindungen bewirkt werden, z.B. über Seilzüge, Hydraulik, elektrische Stelleinrichtungen und dergleichen. Durch die Wirkverbindung der Lagersteilen, liegt - zumindest bei paarweiser Zuordnung - die Drehachse der Anzeigeeinrichtung bzw. der Baueinheit auf der Mitte der Verbindungslinie der miteinander gekoppelten Lagerstellen, also parallel zu der sichtbaren Oberfläche der Anzeigeeinrichtung bzw. der Baueinheit. Ein Vorteil der Koppelung besteht in der Tatsache, daß nur Druckkräfte auf die Anzeigeeinrichtung bzw. der Baueinheit aufgebracht werden müssen. Die Wegstrecke, über die die durch die Druckkraft beaufschlagte Kolbenstange in Richtung des Gehäuseinneren bewegt wird, wird von der gekoppelten Lagerstelle in umgekehrter Richtung zurückgelegt. So wird ein insgesamtes Zurückbewegen der Anzeigeeinrichtung bzw. der Baueinheit bis zu einer Endposition in das Gehäuseinnere vermieden. Weiterhin müssen keine Rückstell- oder Griffvorrichtungen an der Anzeigeeinrichtung bzw. der Baueinheit angebracht werden, um eine Bewegung der Anzeigeeinrichtung bzw. der Baueinheit zum Benutzer zu bewirken.

Beispielsweise kann die Koppelung der Lagerstellen durch Seil- oder Bowdenzüge erfolgen. Hierbei ist von Vorteil, daß der Einsatz handelsüblicher Seiloder Bowdenzüge eine preiswerte, vielfach erprobte, zuverlässige und einfach zu ersetzende Wirkverbindung herstellt. Durch die bauartbedingte Flexibilität der Züge, kann deren Verlegung an die Gegebenheiten des Gehäuseinneren angepaßt werden.

Weiterhin ist durch die Wirkverbindung der Lagerstellen über Fluide eine hydraulische Koppelung zu realisieren, wobei besonders vorteilhaft die Hydraulikkanäle in die Gehäusewandung zu integrieren sind. Dadurch wird keinerlei Raum im Gehäuseinneren beansprucht und die Wandungen werden nicht durch Aufnahmen oder Halter belastet. Ferner ist durch die Hydraulik die Möglichkeit gegeben, alle Lagerstellen untereinander zu koppeln und so einen Drehpunkt der Anzeigeeinrichtung bzw. der Baueinheit zu erzeugen, der im Mittelpunkt der Fläche liegt, die von den Endpunkten der Lagerstellen aufgespannt wird.

Von Vorteil ist weiterhin, daß durch die geeignete Wahl der Viskosität der hydraulischen Koppelung eine einstellbare Dämpfung erreicht. So wird erreicht, daß die Anzeigeeinrichtung nur langsam verschwenkt werden kann, wodurch ein ungewolltes Verstellen der Anzeigeeinrichtung über die gewünschte Position hinaus vermieden werden kann. Weiterhin wird durch die dämpfende Wirkung der Hydraulikflüssigkeit eine Rückstellung der Anzeigeeinrichtung in die Normalposition verhindert, so daß die gewählte Einstellung erhalten bleibt.

Bei einer Verschwenkung der Anzeigeeinrichtung bzw. der Baueinheit über elektrische Signalaufnehmer, Signalgeber und Stellglieder, müssen vorteilhafterweise keine Vorgaben hinsichtlich der Verlegung der Leitungswege innerhalb des Gehäuses beachtet werden. Die Leitungen können sowohl in die Gehäusewandung integriert als auch entlang der Wandung verlegt werden. Der Einsatz von Stellgliedern erlaubt eine räumliche Trennung von Verstelleinrichtung und Anzeigeeinrichtung bzw. Baueinheit, ähnlich der von elektrisch verstellbaren Fensterhebern und Außenspiegeln. Die Verstelleinrichtung kann beispielsweise in der Nähe des Lenkrades montiert werden, damit der Benutzer die Hände während der Fahrt nicht bis zur Anzeigeeinrichtung bewegen muß.

Als besonders vorteilhaft anzusehen ist eine Multifunktionseinrichtung mit einem in dem Ausstattungsteil festlegbaren Gehäuserahmen, der seinerseits zur Aufnahme der beweglichen Lagerung der Anzeigeeinrichtung hergerichtet ist. Eine derartige Multifunktionseinrichtung kann als Komplettmodul beispielsweise in eine Schalttafel oder in eine Mittelkonsole eingepaßt werden. Es ist jedoch auch denkbar, das Ausstattungsteil als Gehäuse auszubilden.

Auf Grund der geringen Bautiefe der Lagerung und der guten Winkeleinstellbarkeit ist die Anwendung der Erfindung auf andere Informationsbereitsteller denkbar. Der Einbau beispielsweise eines oder mehrerer Anzeigeeinrichtungen oder Baueinheiten in Rücklehnen oder Kopfstützen von Frontsitzen zur Darstellung von Fernsehprogrammen oder als Computerbildschirm ist vorteilhaft zu realisieren.

Nachfolgend wird die Erfindung anhand mehrerer Ausführungsbeispiele näher beschrieben werden. Die zugehörigen Zeichnungen zeigen:
- Figur 1: einen Ausschnitt einer Schalttafel eines Kraftfahrzeuges mit senkrechter Achse verschwenkter Anzeigeeinrichtung, insbesondere Bildschirm,
- Figur 2: einen Ausschnitt einer Schalttafel eine Kraftfahrzeuges mit in waagerechter Achse verschwenkbarer Baueinheit von Anzeigeeinrichtung und Bedienelementen,
- Figur 3: eine Darstellung einer Multifunktionseinrichtung aus Sicht eines Fahrzeugbenutzers,
- Figur 4: eine Ansicht der Multifunktionseinrichtung gemäß Schnitt III-III in Fig. 3,
- Figur 5: eine Ansicht gemäß Schnitt IV-IV in Fig. 4,
- Figur 6: eine Darstellung einer Multifunktionseinrichtung aus Sicht eines Fahrzeugbenutzers,
- Figur 7: eine Ansicht gemäß Schnitt VI-VI in Fig. 7 und
- Figur 8: eine schematische Darstellung einer kardanischen Aufhängung der elektronischen Anzeigeeinrichtung bzw. der Baueinheit.

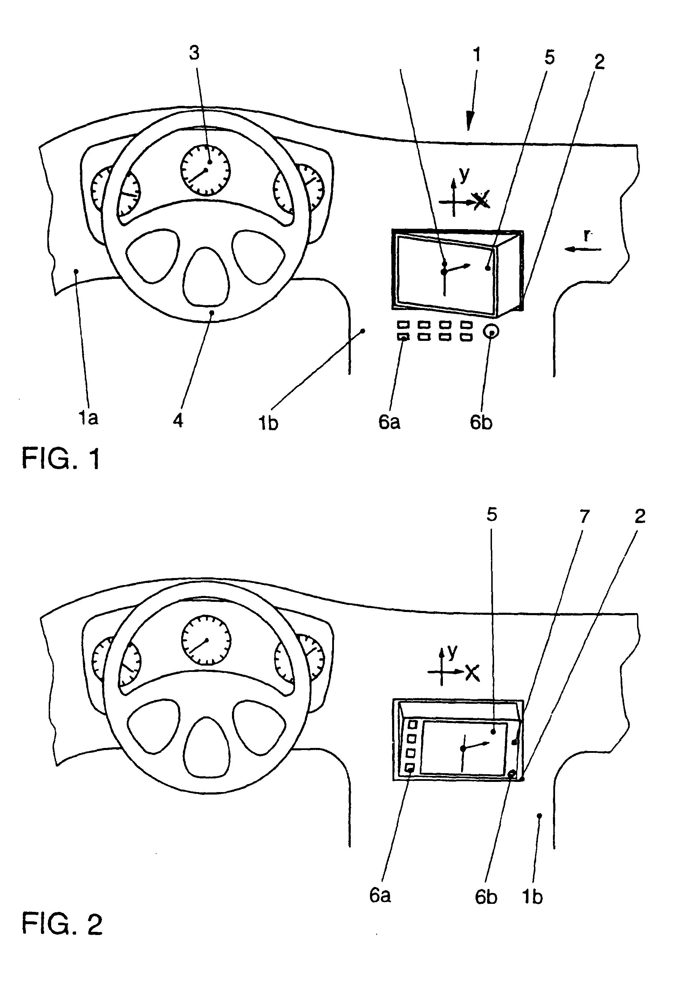

In Figur 1 ist der Ausschnitt einer Schalttafel eines Kraftfahrzeuges mit Blickrichtung vom Sitz des Fahrers nach vorn auf die Schalttafel 1 (Ausstattungsteil) gezeigt. Ausschnittsweise ist der dem Fahrersitz gegenüberliegende Bereich 1a der Schalttafel 1 mit als Zeigerinstrumenten ausgebildeten Anzeigeeinrichtung 3 und dem Lenkrad 4 sowie die Mittelkonsole 1b dargestellt. Ein Ausschnitt 2 der Mittelkonsole nimmt den Bildschirm 5 der Multifunktionseinrichtung auf, dem unterhalb des Ausschnitts 2 angeordnete Bedienelemente 6, bestehend aus Tasten 6a und einem Drehschalter 6b, zugeordnet sind. Mit Hilfe der Bedienelemente 6a können verschiedene zu bedienende, im Kraftfahrzeug vorhandene Zusatzgeräte, wie ein Navigationsgerät, Audiogeräte oder ein Mobilfunkgerät, ausgewählt werden. Mit dem Drehschalter 6b wird das jeweilige ausgewählte Zusatzgerät bedient. Für die Bedienung notwendige Informationen 5a werden dem Benutzer auf dem Bildschirm sichtbar gemacht.

In Figur 1 wurde der Bildschirm 5 zur Verbesserung des Kontrastes in seiner senkrechten Achse y zum Fahrersitz hin verschwenkt. Dies geschieht im Ausführungsbeispiel durch leichten Fingerdruck auf die zum Fahrersitz gewandte Seite des Bildschirmrahmens. Über diese Maßnahme läßt sich beispielsweise der Kontrast auf der Oberfläche des Bildschirms bei in Pfeilrichtung r einfallendem Licht verbessern.

Bei der in Figur 2 dargestellten Multifunktionseinrichtung bildet der Bildschirm 5 mit den Bedienelementen 6, die wiederum aus Tasten 6a und einem Drehschalter 6b bestehen, eine Baueinheit 7 welche im Ausschnitt 2 der Mittelkonsole 1b in zwei Achsen x, y schwenkbar angeordnet ist. Die Integration von Bildschirm 5 und Bedienelementen 6 in einer Baueinheit 7 erhöht die Bedienbarkeit der Multifunktionseinrichtung, da die Gefahr, daß Bedienelemente 6 durch Verschwenken des Bildschirmes 5 nicht sichtbar oder schwer zugänglich sind, nicht gegeben ist. In Figur 2 wurde die Baueinheit 7 in der waagerechten Achse x durch Druck auf den unteren Bereich der Baueinheit verschwenkt, wodurch Spiegelungen, hervorgerufen bei Lichteinstrahlungen durch die nicht dargestellten Scheiben des Kraftfahrzeuges minimiert werden können. Außerdem kann so die Baueinheit optimal auf eine angenehme Blickrichtung des Benutzers eingestellt werden.

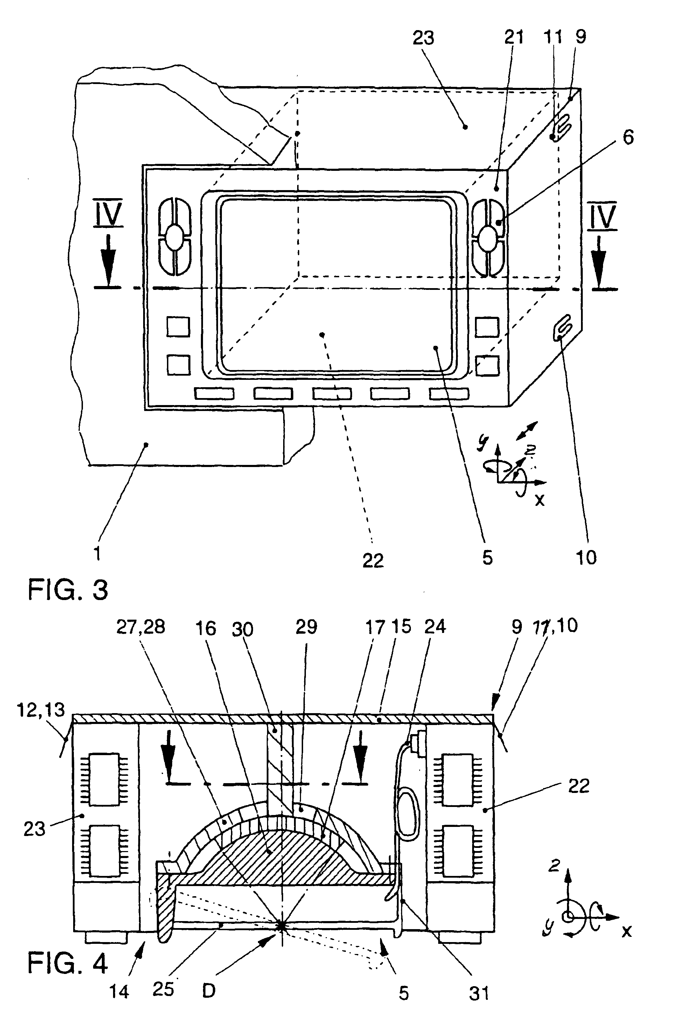

Figur 3 zeigt eine Multifunktionseinrichtung, die hier in einer nur ausschnittsweise dargestellten Schalttafel 1 verbaut ist. Eine Anzeigeeinrichtung 5 ist innerhalb eines Gehäuserahmens 9 um die Achsen x und y einzeln oder gemeinsam verschwenkbar. Auf einer Stirnseite 21 des Gehäuserahmens 9 sind mehrere Bedienelemente 6 in an sich bekannter Weise untergebracht. Die gesamte Multifunktionseinrichtung ist hier als Einschubmodul ausgebildet und weist zur Arretierung in einem der Schalttafel 1 zugeordneten Halterahmen (nicht dargestellt) Rastzungen 10, 11 auf, wie sie beispielsweise auch zur Befestigung konventioneller Kraftfahrzeugradios üblich sind. Auf der in dieser Ansicht nicht ersichtlichen Seite des Gehäuserahmens 9 sind ebenfalls Rastzungen angeordnet (siehe hierzu in Figur 4 die Bezugsziffern 12, 12).

Den inneren Aufbau der erfindungsgemäßen Multifunktionseinrichtung verdeutlicht Figur 4. Die wesentlichen Elemente des Gehäuserahmens 9 sind eine Frontpartie 14, eine Rückwand 15, sowie seitliche Funktionsräume 22, 23 in denen hier nur symbolisch angedeutete Elektronikbauteile untergebracht sind. Letztere sind durch die in der Frontpartie 14 angebrachten Bedienelemente beeinflußbar und können darüber hinaus mit externen Signalen aus Sensoreinrichtungen oder Rundfunkübertragungseinrichtungen versorgt werden. Eine Übertragungsleitung 24 versorgt die Anzeigeeinrichtung 5 mit Betriebsenergie und ist darüber hinaus geeignet, Signale von den elektronischen Funktionseinheiten zur Anzeigeeinrichtung 5 zu übermitteln. Wo sie letztlich dargestellt werden.

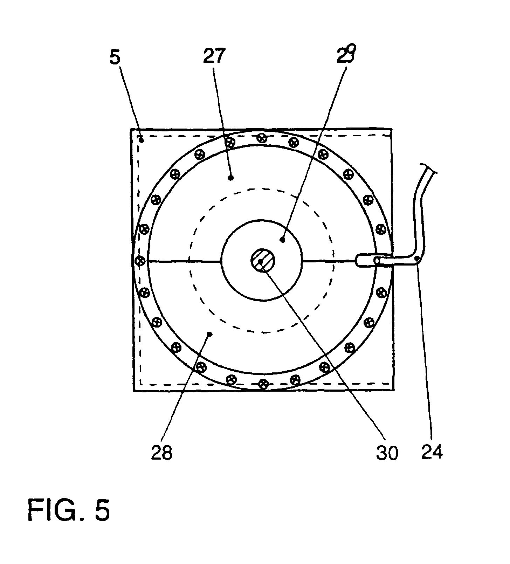

Erfindungswesentlich ist hier ein als Teilkugel ausgebildetes Gelenkkopfelement 16, das in einem der Rückwand 15 zugeordneten Pfannenelement 17 um die Achsen x und y einzeln oder gemeinsam verdrehbar ist. Der Krümmungsradius der zur Berührung vorgesehenen Flächen ist hier so gewählt, daß sich auf der Bildschirmoberfläche 25 ein Drehpunkt D ergibt. Damit kann innerhalb einer Öffnung 26 des Gehäuserahmens 9 die Anzeigeeinrichtung 5 so verschwenkt werden, daß auch für relativ große Verstellwinkel die inneren Wandungen der Funktionsräume 22 und 23 nicht berührt werden. Zur Einstellung definierter Maximalanschläge sind Führungsschalen 27, 28 (siehe hierzu auch Figur 5) vorgesehen, die als Bestandteil des die Anzeigeeinrichtung 5 aufnehmenden Trägergestells im Bereich des der Rückwand 15 zugeordneten Poles eine kreisförmige Ausnehmung 29 bilden. In den jeweiligen Maximalstellungen schlägt deren Rand an einen Haltezapfen 30 an, der an der Rückwand 15 einerseits und dem Pfannenelement 17 andererseits befestigt ist. Bei einem besonders vorteilhaften Ausführungsbeispiels sind die drei letztgenannten Bauteile materialeinheitlich zu einen einzigen Bauteil zusammengefaßt, daß besonders kostengünstig durch Kunststoffspritzung hergestellt werden kann. Vorstellbar ist allerdings auch die Zusammenfassung des Zapfen 30 und des Pfannenelementes 17 zu einem Bauteil, daß dann seinerseits durch Verschraubung oder Verklipsung in die Rückwand 15 eingepaßt wird. Außerdem sind auch Ausführungen möglich, bei denen die Innenwandungen der Funktionsräume 22, 23 und der Rückwand 15 gemeinsam eine - gegebenenfalls einteilig ausgeführte - Kalotte bilden, in der ein teilkugelartig ausgeführtes Trägergestell drehbeweglich gehalten ist.

Das Gelenkkopfelement 16 ist bei einem bevorzugten Ausführungsbeispiels ebenfalls integraler Bestandteil des die Anzeigeeinrichtung 5 haltenden Trägergestells. Dieses ist hier nach Art eines Schubfaches gehalten, daß in einem mit 31 bezeichneten Seitenbereich eine Einschuböffnung aufweist. In diese wird die Anzeigeeinrichtung eingeschoben oder eingestellt und anschließend arretiert, beispielsweise durch hier nicht weiter dargestellte Rastkörper, die in Rastausnehmungen eingreifen. Die Lagerschalen 27, 28 sind im vorliegenden Beispiel an das Trägergestell angeschraubt. Vorstellbar ist allerdings auch eine Befestigung durch Verklipsen oder Aufstecken.

In kinematischer Abwandlung des in Figur 4 dargestellten Prinzips ist auch eine Variante denkbar, bei der ein Pfannenelement dem Trägergestell der Anzeigeeinrichtung 5 zugeordnet ist. Das Gelenkkopfelement und die das Pfannenelement umschließenden Lagerschalen können dann entweder der Rückwand 15, den Innenwänden der Seitenteile 22, 23 oder einem Boden 32 bzw. einem Deckel 33 (siehe Figur 3) des Gehäuserahmens 9 zugeordnet sein. Die Erfindung umfaßt auch solche Ausführungsformen, bei denen zum einen der Radius des Gelenkkopfelementes deutlich kleiner als die Breite des Bildschirmes ist und zum anderen das Gelenkkopfelement direkt hinter der Bildschirmoberfläche in einem entsprechend kleinen Pfannenelement gelagert ist.

Bei einem in der Zeichnung nicht dargestellten Ausführungsbeispiel ist die gesamte Anzeigeeinrichtung 5 noch in z-Richtung verschiebbar, und zwar in einer vorzugweise nach Art eines mechanischen FlipFlops gestalteten Führung. Bei besonders extremen Sichtverhältnissen kann auf diese Weise die Anzeigeeinrichtung 5 aus dem Gehäuserahmen 9 herausbewegt werden. Zu diesem Zweck ist beispielsweise ein äußerer Rahmen der Anzeigeeinrichtung 5 lediglich mit Tastendruck zu beaufschlagen. Federkraftbetätigt wird dann die gesamte Anzeigeeinrichtung 5 samt Lagerung aus dem Gehäuserahmen 9 herausbewegt. Für die Rücksetzbewegung genügt dann ebenfalls ein leichter Druck auf besagten Rahmen. Derartige Flip-Flop-Konstruktionen sind in unterschiedlichen Varianten beispielsweise aus dem Möbelbau oder von Abdeckungen/Klappen an elektronischen Geräten bekannt und werden hier deshalb nicht im einzelnen beschrieben.

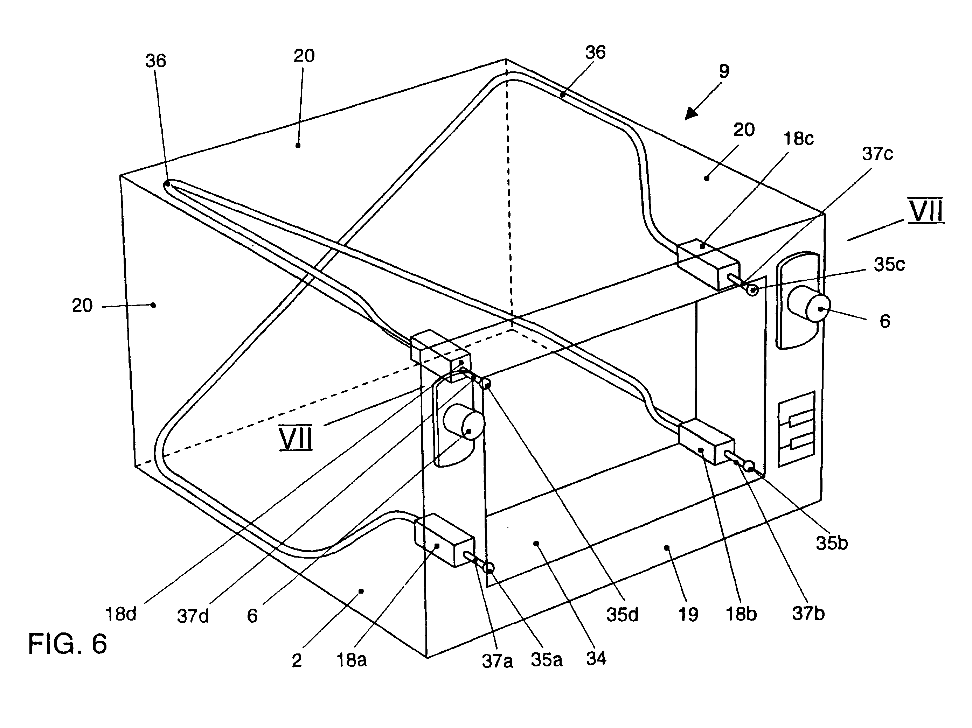

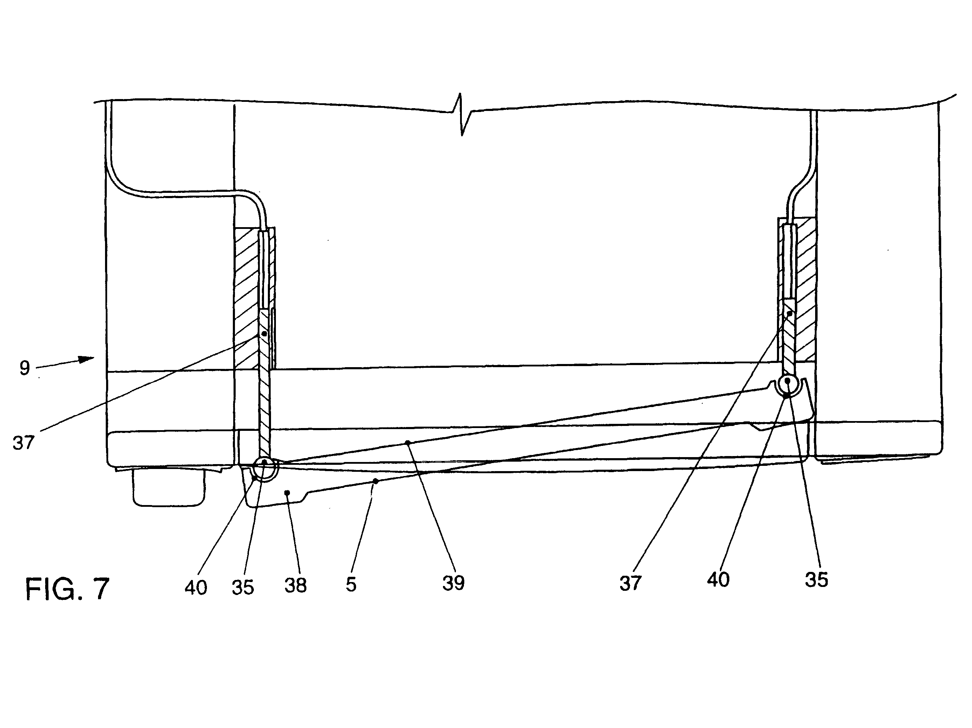

Eine weitere Ausführung der Schwenkeinrichtung der Multifunktionseinrichtung ist in den Figuren 6 und 7 gezeigt.

Man erkennt in Figur 6 eine insgesamt mit 9 bezeichnete Gehäuseanordnung einer Multifunktionseinrichtung mit Gehäusewänden 20, einer Gehäusefront 19 und Bedienungseinrichtungen 6, wobei die Gehäuseanordnung 9 in dieser Ansicht ohne eine Anzeigeeinrichtung 5 (siehe Fig. 7) dargestellt ist. In einem Gehäuseausschnitt 34 sind hier vier Lagerstellen 18 a-d montiert, deren hier als Kugelform ausgebildeten Aufnahmen 35 a-d für eine Anzeigeeinrichtung 5 zurückgesetzt hinter der Gehäusefront 19 angeordnet sind. In dem Gehäuse 9 sind hier Leitungen 36 zur Koppelung der Lagerstellen (18a, 18c bzw. 18b, 18d) in dem rückwärtigen Bereich entlang der inneren Gehäusewandungen, vorzugsweise in den Eckbereichen, verlegt. Die Leitungen 36 kreuzen sich hier auf der Gehäuserückwand, so daß eine Verbindung der Lagerstellen 18 a-d in diagonaler Weise bzw. in Überkreuzanordnung erfolgt. In einem bevorzugten Ausführungsbeispiel ist als Wirkmedium ein Fluid vorgesehen. Die Koppelung der Lagerstellen 18 a-d erfolgt also hydraulisch. Die Leitungen 36 sind an den Lagerstellen 18 a-d angeschlossen, die gleichzeitig als Vorratsbehälter und Zylinder für das Fluid ausgebildet sind. Die kugelförmig ausgeführten Aufnahmen 35 a-d für die Anzeigeeinrichtung sind an Kolbenstangen 37 a-d angebracht und dadurch senkrecht zur Gehäusefront 19 längsverschieblich ausgelegt. Durch Druck auf die Anzeigeeinrichtung 5 kann im Rahmen der Verschwenkmöglichkeit jede Verstellung um den Mittelpunkt der Anzeigeeinrichtung 5 erreicht werden.

Die Schnittdarstellung in Figur 7 zeigt die Gehäuseanordnung 9 einer Multifunktionseinrichtung mit der darin gelagerten Anzeigeeinrichtung 5. Diese weist hier einen Rahmen 38 auf, auf dessen Rückseite 39 die Aufnahmen 35 a-d (in der Zeichnung sind nur 35c und 35d dargestellt) nach Art eines Kugelgelenkes gelagert sind. An der Rückseite sind Gelenkpfannenelemente 40 a-d (in der Zeichnung sind nur 40c und 40d dargestellt) ausgebildet, die den Aufnahmen 35 a-d freie rotatorische Bewegungen in den Gelenkpfannen ermöglichen. Die Kolbenstangen 37 a-d (in der Zeichnung sind nur 37c und 37d dargestellt) sind in den Lagerungsvorrichtungen 18a-d (in der Zeichnung sind nur 18c und 18d dargestellt) geführt und ermöglichen eine translatorische Bewegung.

Es wird darauf hingewiesen, daß die Koppelung der Lagerstellen 18 hydraulisch, elektrisch, seiloder bowdenzugbetrieben oder auf andere Weise wirkverbunden ausführbar ist. Die Verlegung der Leitungen 36 erfolgt entweder entlang der Gehäusewandung oder, wie bei nicht in der Zeichnung dargestellten Ausführungsbeispielen, gehäusewandintegriert oder als Kombination aus beiden Verlegungsarten. Vorteilhafterweise werden die Lagerstellen 18 kreuzweise diagonal verbunden, in anderen, nicht aufgeführten, Ausführungsbeispielen erfolgt die Koppelung paarweise parallel, über ein gemeinsames Leitungssystem oder auf andere Weise.

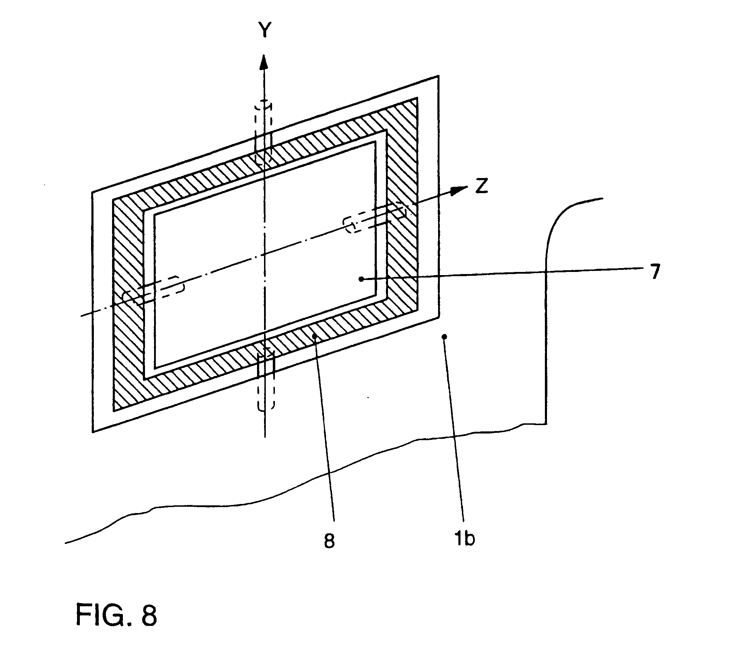

Figur 8 zeigt als Beispiel für eine verschwenkbare Lagerung der Baueinheit 7 einen kardanischen Aufhängungsmechanismus. Dazu ist die Baueinheit in einem Zusatzgehäuse 8 angeordnet und in diesem seiner waagerechten Achse x schwenkbar gelagert. Das Zusatzgehäuse 8 wiederum ist um seine senkrechte Achse y schwenkbar im Ausschnitt 2 mit der Mittelkonsole 1b verbunden, wodurch eine Verschwenkbarkeit der Baueinheit sowohl in Waagerechter als auch in senkrechter Richtung gegeben ist.

### BEZUGSZEICHENLISTE

- 1: Schalttafel
- 1a: Bereich der Schalttafel
- 1b: Mittelkonsole
- 2: Ausschnitt
- 3: Anzeigeeinrichtung
- 4: Lenkrad
- 5: Bildschirm, Anzeigeeinrichtung
- 6: Bedienelemente
- 6a: Tasten
- 6b: Drehschalter
- 7: Baueinheit
- 8: Zusatzgehäuse
- x: waagerechte Achse
- y: senkrechte Achse
- z: Verschiebungsachse
- r: Richtung des einfallenden Lichtes
- 9: Gehäuse
- 10: Rastzunge
- 11: Rastzunge
- 12: Rastzunge
- 13: Rastzunge
- 14: Frontpartie
- 15: Rückwand
- 16: Gelenkkopfelement
- 17: Pfannenelement
- 18: Lagerstellen
- 19: Front
- 20: Wand
- 21: Stirnseite
- 22: Funktionsraum
- 23: Funktionsraum
- 24: Übertragungsleitung
- 25: Bildschirmoberfläche
- 26: Öffnung
- 27: Führungsschale
- 28: Führungsschale
- 29: Ausnehmung
- 30: Haltezapfen
- 31: Seitenbereich
- 32: Boden
- 33: Deckel
- 34: Gehäuseausschnitt
- 35: Aufnahme
- 36: Leitung
- 37: Kolbenstange
- 38: Rahmen
- 39: Rückseite
- 40: Gelenkpfannenelement

## Patentansprüche

1. Multifunktionseinrichtung für ein Kraftfahrzeug mit einer elektronischen Anzeigeeinrichtung (5), insbesondere einem Bildschirm, zur Darstellung von Informationen und mindestens einem Bedienelement (6), wobei zumindest die Anzeigeeinrichtung (5) im Sichtbereich des Fahrzeugführers in einem Ausschnitt eines Ausstattungsteils (1) des Kraftfahrzeuges angeordnet ist, wobei zumindest die Anzeigeeinrichtung (5) zur Verbesserung der Ablesbarkeit der Anzeigeeinrichtung in mindestens zwei Achsen (x, y) schwenkbar in dem Ausstattungsteil (1) gelagert ist, **dadurch gekennzeichnet, dass** sich die Achsen (x, y) in einem Drehpunkt (D) schneiden, der auf der Bildschirmoberfläche der Anzeigeeinrichtung (5) liegt.

2. Einrichtung nach Anspruch 1, **dadurch gekennzeichnet, daß** die Anzeigeeinrichtung (5) gemeinsam mit dem oder den Bedienelementen (6) eine Baueinheit (7) bildet.

3. Einrichtung nach Anspruch 2, **dadurch gekennzeichnet, dass** die Baueinheit (7) in den mindestens zwei Achsen (x, y) schwenkbar gelagert ist.

4. Einrichtung nach Anspruch 1, **dadurch gekennzeichnet, dass** ein die Anzeigeeinrichtung (5) umschließendes Gehäuse (9) vorgesehen ist, welches in den Ausschnitt (2) des Ausstattungsteils (1) einsetzbar ist und die Anzeigeeinrichtung in diesem in den mindestens zwei Achsen (x, y) schwenkbar gelagert ist.

5. Einrichtung nach Anspruch 4, **dadurch gekennzeichnet, daß** das Gehäuse (9) das oder die Bedienelemente (6) aufnimmt.

6. Einrichtung nach einem der Ansprüche 1 bis 5, **dadurch gekennzeichnet, daß** die Anzeigeeinrichtung (5) oder die Baueinheit (7) in einer senkrechten und in einer waagerechten Achse (x, y) schwenkbar gelagert ist.

7. Einrichtung nach einem der Ansprüche 1 bis 6, **dadurch gekennzeichnet, daß** die Anzeigeeinrichtung (5) bzw. die Baueinheit (7) um einen Winkel von maximal 10 bis 20° schwenkbar ist.

8. Einrichtung nach einem der Ansprüche 1 bis 7, **dadurch gekennzeichnet, daß** die elektronische Anzeigeeinrichtung (5) bzw. die Baueinheit (7) durch Druck auf die Oberfläche der Anzeigeeinrichtung oder durch Schalterbetätigung schwenkbar ist.

9. Einrichtung nach einem der Ansprüche 1 bis 7, **dadurch gekennzeichnet, daß** die Anzeigeeinrichtung (5) bzw. die Baueinheit (7) in Abhängigkeit von Sensorsignalen automatisch verschwenkbar ist.

10. Einrichtung nach einem der Ansprüche 1 bis 9, **dadurch gekennzeichnet, daß** die Anzeigeeinrichtung (5) bzw. die Baueinheit (7) über mindestens ein Kugelgelenk (16,17) in dem Ausschnitt (2) bzw. in dem Gehäuse (9) schwenkbar angeordnet ist.

11. Einrichtung nach Anspruch 10, **dadurch gekennzeichnet , daß** das Kugelgelenk wenigstens ein Pfannenelement (17) umfaßt, in dem ein als Teil-oder Vollkugel ausgebildetes Gelenkkopfelement (16) drehbeweglich gehalten ist, und das Pfannenelement (17) oder das Gelenkkopfelement (16) zumindest mittelbar dem Ausstattungsteil (1) und das Gelenkkopfelement (16) oder das Pfannenelement (17) zumindest mittelbar der Anzeigeeinrichtung (5) zugeordnet ist.

12. Einrichtung nach einem der Ansprüche 1 bis 9, **dadurch gekennzeichnet, daß** in dem Ausschnitt (2) des Ausstattungsteils (1) bzw. in dem Gehäuse (9) mit einer Front (19) und Wandungen (20) wenigstens drei Lagerstellen (18) vorgesehen sind, in denen mit der Anzeigeeinrichtung (5) bzw. der Baueinheit (7) verbundene Lagerelemente in im wesentlichen senkrecht zur Front (19) liegender Richtung längsverschieblich gehalten sind.

13. Einrichtung nach Anspruch 12, **dadurch gekennzeichnet, daß** die Lagerstellen (18a-18d) an vier Punkten in Eckbereichen des Gehäuses (9) angebracht sind.

14. Einrichtung nach Anspruch 12 oder 13, **dadurch gekennzeichnet, daß** wenigstens zwei der Lagerstellen (18a-18d) miteinander über eine Kopplung wirkverbunden sind.

15. Einrichtung nach Anspruch 14, **dadurch gekennzeichnet, daß** die Kopplung über Seilzüge oder hydraulisch ausgeführt ist.

16. Einrichtung nach Anspruch 14 oder 15, **dadurch gekennzeichnet, daß** die Lagerstellen (7a bis 7d) in nahezu einer Ebene in Rechteckform angeordnet sind und die Kopplung diagonal ausgeführt ist.

17. Einrichtung nach einem der Ansprüche 14 bis 16, **dadurch gekennzeichnet, daß** die Elemente der Kopplung zumindest teilweise im hinter der Anzeigeeinrichtung (5) bzw. der Baueinheit befindlichen Bereich des Gehäuses (9) bzw. des Ausschnittes (2) geführt sind.

18. Einrichtung nach Anspruch 14 oder 15, **dadurch gekennzeichnet, daß** die Elemente der Kopplung als integraler Bestandteil zumindest abschnittsweise in der Wandung (20) geführt sind.

19. Einrichtung nach einem der Ansprüche 1 bis 8, **dadurch gekennzeichnet, daß** die Anzeigeeinrichtung (5) bzw. die Baueinheit (7) über eine kardanischen Aufhängungsmechanismus im Ausschnitt (2) bzw. im Gehäuse (9) schwenkbar angeordnet ist.

## Claims

1. Multi-function device for a motor vehicle having an electronic display device (5), in particular a display screen, to show information, and having at least one operating element (6), wherein at least the display device (5) is disposed in the field of vision of the driver of the vehicle in a portion of a fitting (1) of the motor vehicle, wherein at least the display device (5) is mounted so as to be pivotable in at least two axes (x, y) in the fitting (1) in order to improve the readability of the display device, **characterised in that** the axes (x, y) intersect at a point of rotation (D) on the display screen surface of the display device (5).

2. Device according to claim 1, **characterised in that** the display device (5) together with the operating element or operating elements (6) forms a constructional unit (7).

3. Device according to claim 2, **characterised in that** the constructional unit (7) is mounted so as to be able to pivot in the at least two axes (x, y).

4. Device according to claim 1, **characterised in that** a housing (9) enclosing the display device (5) is provided and can be inserted into the portion (2) of the fitting (1) and the display device is mounted therein so as to be able to pivot in the at least two axes (x, y).

5. Device according to claim 4, **characterised in that** the housing (9) receives the operating element or operating elements (6).

6. Device according to one of claims 1 to 5, **characterised in that** the display device (5) or the constructional unit (7) is mounted so as to be able to pivot in a vertical and in a horizontal axis (x, y).

7. Device according to any one of claims 1 to 6, **characterised in that** the display device (5) or the constructional unit (7) can pivot about an angle of a maximum 10 to 20°.

8. Device according to any one of claims 1 to 7, **characterised in that** the electronic display device (5) or the constructional unit (7) can pivot by means of pressure on to the surface of the display device or by means of switch actuation.

9. Device according to any one of claims 1 to 7, **characterised in that** the display device (5) or the constructional unit (7) can pivot automatically in response to sensor signals.

10. Device according to any one of claims 1 to 9, **characterised in that** the display device (5) or the constructional unit (7) is disposed in the portion (2) or in the housing (9) in such a manner as to be able to pivot by way of at least one ball-and-socket joint (16,17).

11. Device according to claim 10, **characterised in that** the ball-and-socket joint encompasses at least one socket element (17), in which is held a joint head element (16), which is in the form of a partial or full sphere, in such a manner that the said joint head element is able to rotate, and the socket element (17) or the joint head element (16) is allocated at least indirectly to the fitting (1) and the joint head element (16) or the socket element (17) is allocated at least indirectly to the display device (5).

12. Device according to any one of claims 1 to 9, **characterised in that** in the portion (2) of the fitting (1) or in the housing (9) with a front (19) and walls (20) are provided at least three bearing sites (18) in which are held bearing elements, which are connected to the display device (5) or the constructional unit (7), in such a manner that the said bearing elements are displaceable longitudinally in the direction lying substantially perpendicular to the front (19).

13. Device according to claim 12, **characterised in that** the bearing sites (18a-18d) are provided at four points in comer regions of the housing (9).

14. Device according to claim 12 or 13, **characterised in that** at least two of the bearing sites (18a-18d) are operatively connected to each other by means of a coupling.

15. Device according to claim 14, **characterised in that** the coupling is produced hydraulically or by way of cable pulls.

16. Device according to claim 14 or 15, **characterised in that** the bearing sites (7a to 7d) are disposed virtually in one plane in a rectangular shape and the coupling is produced in a diagonal manner.

17. Device according to any one of claims 14 to 16, **characterised in that** the elements of the coupling are guided at least partially in the region of the housing (9) or of the portion (2) located behind the display device (5) or the constructional unit.

18. Device according to claim 14 or 15, **characterised in that** the elements of the coupling are guided as an integral component at least in portions in the wall (20).

19. Device according to any one of claims 1 to 8, **characterised in that** the display device (5) or the constructional unit (7) is disposed in such a manner as to be able to pivot by way of a gimbals suspension mechanism in the portion (2) or the housing (9).

## Revendications

1. Dispositif multifonction destiné à un véhicule automobile et comprenant un dispositif d'affichage électronique (5), notamment un écran pour la présentation d'informations et au moins un élément de commande (6), dans lequel au moins le dispositif d'affichage (5) est placé dans le champ visuel du conducteur du véhicule, dans un espace d'une partie équipement (1) du véhicule automobile, le dispositif d'affichage (5) au moins étant monté dans la partie équipement (1) de manière à pouvoir pivoter autour d'au moins deux axes (x, y) afin d'améliorer la lecture du dispositif d'affichage, **caractérisé en ce que** les axes (x, y) se coupent en un centre de rotation (D) situé sur la surface de l'écran du dispositif d'affichage (5).

2. Dispositif selon la revendication 1, **caractérisé en ce que** le dispositif d'affichage (5) constitue, en association avec le ou les élément(s) de commande (6), une unité modulaire (7).

3. Dispositif selon la revendication 2, **caractérisé en ce que** l'unité modulaire (7) est montée de manière à pouvoir pivoter autour des deux axes (x, y) au moins.

4. Dispositif selon la revendication 1, **caractérisé en ce qu'**on prévoit un boîtier (9) qui entoure le dispositif d'affichage (5), qui peut être inséré dans l'espace (2) réservé dans la partie équipement (1) et **en ce que** le dispositif d'affichage est monté dans ce boîtier de manière à pouvoir pivoter autour des deux axes (x, y) au moins.

5. Dispositif selon la revendication 4, **caractérisé en ce que** le boîtier (9) loge le ou les élément(s) de commande (6).

6. Dispositif selon l'une des revendications 1 à 5, **caractérisé en ce que** le dispositif d'affichage (5) ou l'unité modulaire (7) est monté de manière à pouvoir pivoter autour d'un axe vertical et d'un axe horizontal (x, y).

7. Dispositif selon l'une des revendications 1 à 6, **caractérisé en ce que** le dispositif d'affichage (5) ou l'unité modulaire (7) peut pivoter selon un angle maximal de 10 à 20°.

8. Dispositif selon l'une des revendications 1 à 7, **caractérisé en ce que** le dispositif d'affichage électronique (5) ou l'unité modulaire (7) peut être amené à pivoter par une pression exercée sur la surface du dispositif d'affichage ou par l'actionnement d'un commutateur.

9. Dispositif selon l'une des revendications 1 à 7, **caractérisé en ce que** le dispositif d'affichage (5) ou l'unité modulaire (7) peut être amené à pivoter automatiquement en fonction de signaux provenant de capteurs.

10. Dispositif selon l'une des revendications 1 à 9, **caractérisé en ce que** le dispositif d'affichage (5) ou l'unité modulaire (7) est placé de manière à pouvoir pivoter, par l'intermédiaire d'au moins une articulation sphérique (16, 17), dans l'espace (2) ou bien dans le boîtier (9).

11. Dispositif selon la revendication 10, **caractérisé en ce que** l'articulation sphérique comprend au moins un élément formant cavité (17), dans lequel est retenu, de manière à pouvoir tourner, un élément formant tête d'articulation (16) réalisé en tant que sphère partielle ou sphère complète, et **en ce que** l'élément formant cavité (17) ou l'élément formant tête d'articulation à rotule (16) est associé au moins indirectement à la partie équipement (1), l'élément formant tête d'articulation (16) ou l'élément formant cavité (17) étant associé au moins indirectement au dispositif d'affichage (5).

12. Dispositif selon l'une des revendications 1 à 9, **caractérisé en ce qu'**on prévoit, dans l'espace (2) de la partie équipement (1) ou dans le boîtier (9) comportant une partie frontale (19) et des parois (20), au moins trois appuis (18) dans lesquels sont maintenus, de manière à pouvoir se déplacer longitudinalement dans la direction située globalement perpendiculairement par rapport à la partie frontale (19), des éléments de support reliés au dispositif d'affichage (5) ou à l'unité modulaire (7).

13. Dispositif selon la revendication 12, **caractérisé en ce que** les appuis (18a à 18d) sont installés en quatre points dans des zones d'angles du boîtier (9).

14. Dispositif selon la revendication 12 ou 13, **caractérisé en ce qu'**au moins deux des appuis (18a à 18d) sont activement reliés entre eux par l'intermédiaire d'un couplage.

15. Dispositif selon la revendication 14, **caractérisé en ce que** le couplage est effectué par l'intermédiaire de câbles de transmission ou bien hydrauliquement.

16. Dispositif selon la revendication 14 ou 15, **caractérisé en ce que** les appuis (7a à 7d) sont disposés approximativement selon un plan de forme rectangulaire et **en ce que** le couplage est effectué en diagonale.

17. Dispositif selon l'une des revendications 14 à 16, **caractérisé en ce que** les éléments du couplage sont guidés, au moins en partie, dans la zone du boîtier (9) ou de l'espace (2), qui est située derrière le dispositif d'affichage (5) ou l'unité modulaire.

18. Dispositif selon la revendication 14 ou 15, **caractérisé en ce que** les éléments du couplage sont guidés, en tant qu'élément constitutif intégré, au moins par sections dans la paroi (20).

19. Dispositif selon l'une des revendications 1 à 8, **caractérisé en ce que** le dispositif d'affichage (5) ou l'unité modulaire (7) est disposé, de manière à pouvoir pivoter par l'intermédiaire d'un mécanisme de suspension à la Cardan, dans l'espace (2) ou dans le boîtier (9).
